Europäisches Patentamt

European Patent Office

Office européen des brevets

(11) Publication number: **0 281 016 B1**

# EUROPEAN PATENT SPECIFICATION

(45) Date of publication of patent specification: **16.09.92**

(51) Int. Cl.⁵: **B29D 23/22**, B29C 31/00, B29C 35/12, B29C 53/84

(21) Application number: **88102803.9**

(22) Date of filing: **25.02.88**

(54) **Multiple-chuck machine for making tubes.**

(30) Priority: **06.03.87 IT 4154387**

(43) Date of publication of application:
**07.09.88 Bulletin  88/36**

(45) Publication of the grant of the patent:
**16.09.92 Bulletin  92/38**

(84) Designated Contracting States:
**AT BE CH DE ES FR GB GR LI LU NL SE**

(56) References cited:
| | |
|---|---|
| EP-A- 0 095 631 | EP-A- 0 151 238 |
| FR-A- 2 118 243 | GB-A- 946 883 |
| US-A- 2 794 481 | US-A- 3 833 979 |
| US-A- 4 078 957 | US-A- 4 513 900 |

(73) Proprietor: **TUBIGOMMA DEREGIBUS S.r.l.**
**Via E. Mattei 1 - Zona Industriale**
**I-35030 Saccolongo (Prov. of Padova)(IT)**

(72) Inventor: **Deregibus, Alfio**
**Via Livorno 12/B**
**I-35100 Padova(IT)**

(74) Representative: **Modiano, Guido et al**
**MODIANO, JOSIF, PISANTY & STAUB**
**Modiano & Associati Via Meravigli, 16**
**I-20123 Milano(IT)**

EP 0 281 016 B1

## Description

The present invention relates to a multiple-chuck machine for making woven and/or metallic spiral rubber tubes.

US-A-2 794 481 discloses a method and an apparatus for making fiber reinforced resin tubing by helically winding, either manually or by mechanical means, fibrous strands impregnated with an uncured thermosetting resin on a cylindrical mandrel.

Since in such resin may develop stresses during curing and in the pipe, due to the differences in the linear coefficient of thermal expansion between the reinforcing fibres and the resin matrix, said US-A-2 794 481 has as its object to propose a method and apparatus for removing or easing such stresses.

According to the same winding method now in widespread use for manufacturing tubes in vulcanized rubber, fixed-position chucks rotate a respective single metallic core supported in a plurality of points with free rollers rigidly associated with a long table.

On this core multiple successive layers of strips of fabric and raw rubber are helically wound mostly by an operator using a moving carriage.

For particular tubes, metallic or plastic wire-like spirals can be wound.

After this operation of first packaging, the tube, still mounted on the metallic core, is removed from the resting table and taken into an autoclave where it is subject to a steam vulcanization process.

Subsequently the tube must be removed from the autoclave, unbandaged and moved to an extraction station where it is freed of the core and wound in coils.

This widespread production method entails very bulky and expensive machinery, large operating spaces and the use of numerous specialized personnel.

This leads to high production costs with a very low per capita yield.

The aim of the present invention is to provide a machine which, by radically modifying the method of producing vulcanized tubes, allows high productive yields with a reduced number of specialized personnel.

Still another object is to provide a machine where the winding chucks are substantially in the same region where the vulcanization of said product will occur.

A further object is to provide a machine where no autoclaves for vulcanization are needed.

Still another object is to provide a multiple machine comprising all the manufacturing steps, which can be operated by a single operator with consequent great savings in costs and space.

Not least object is to provide a machine which allows the manufacturing of tubes of different types and characteristics without changing the operating conditions.

A preferred embodiment of the invention provides a machine which allows to execute all the operations of packaging, vulcanization and extraction of the finished product, always operating on the same spot with no movements of the product.

The aim proposed, as well as these and other objects which will become apparent hereinafter, are achieved by a multiple-chuck machine for making tubes by helically winding raw meterial on cores, characterized in that it comprises at least one head with multiple chucks which motorizes a plurality of said cores arranged side by side and supported by a plurality of resting racks articulated by means of hinges on a basement and positionable in a synchronous manner by means of actuators, said racks being flanked by a thermally insulated openable table adapted to contain said cores, the heads of said table having each a multiple electric terminal strip for supplying power to said cores so as to determine a rise in their temperature, by Joule effect, for the vulcanization of the raw tubes.

Further characteristics and advantages of the invention will become apparent from the detailed description of a preferred embodiment, given only by way of non-limiting example and illustrated in the accompanying drawings, wherein:

figure 1 is a schematic lateral view of the machine;
figure 2 is a schematic plan view of the machine;
figure 3 is a transverse sectioned view of the machine;
figure 4 is a perspective view of the machine.

With reference to the above described figures, the machine, according to the invention, comprises two heads, respectively indicated by numerals 1 and 2, at least one whereof is motorized and has a plurality of chucks, indicated respectively by numerals 3 and 4, which grip the ends of metallic cylindrical cores 5.

Said cores 5 are supported by racks 6 and 7 arranged on two parallel lines and conveniently spaced so that said metallic cores 5 are not subject to excessive flexing during processing.

Each of said racks is composed of a strong metallic arm 8 pivoted at the lower end on a hinge 9 rigidly associated with the basement of the machine or with the floor where the machine is installed.

Upwardly said metallic arm 8 has a box-like element 10 which has a plurality of grooves 11 each containing a pair of support rollers 12 adapted to support one of the metallic cores 5 on which the rubber tube will be produced.

The support rollers 12 allow the rolling of the metallic core 5 with low friction and also allow the winding of the spirals of fabric and raw rubber used in the packaging of the tube without hindrance.

The working position of the element 10, obtained by keeping the metallic arm 8 substantially vertical by means of a double-action piston 13, of the usual, known, construction, called hereinafter piston, is such as to cause the axes of the metallic cores 5 to coincide with the chucks 3 and 4 of the heads, which are articulated to the basement.

This position arranges the cores 5 at a slant in front of a longitudinal rail 14 on which a carriage moves (not illustrated in the drawings), which carries the operator with the material to be wound in a spiral on said cores 5.

An identical arrangement is provided for the racks 7 which are substantially identical to those indicated at 6 and which are flanked by a rail 15 for a movable carriage.

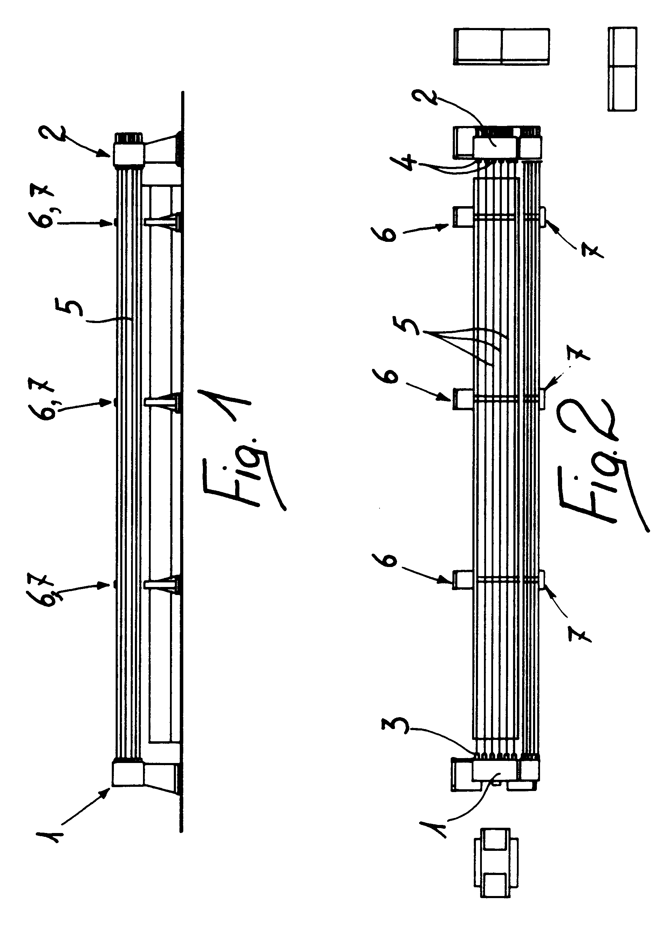

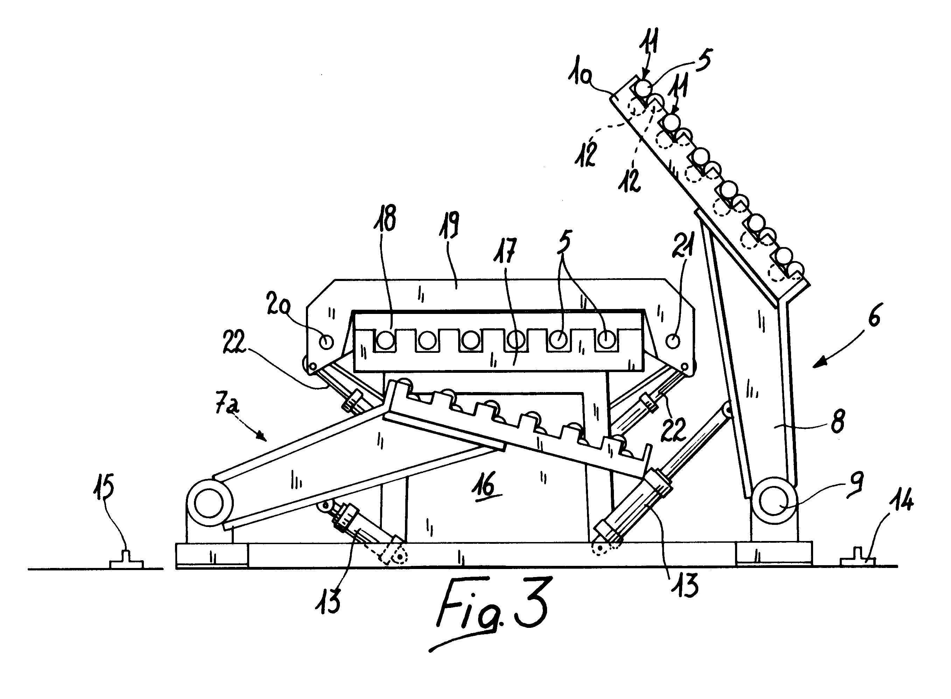

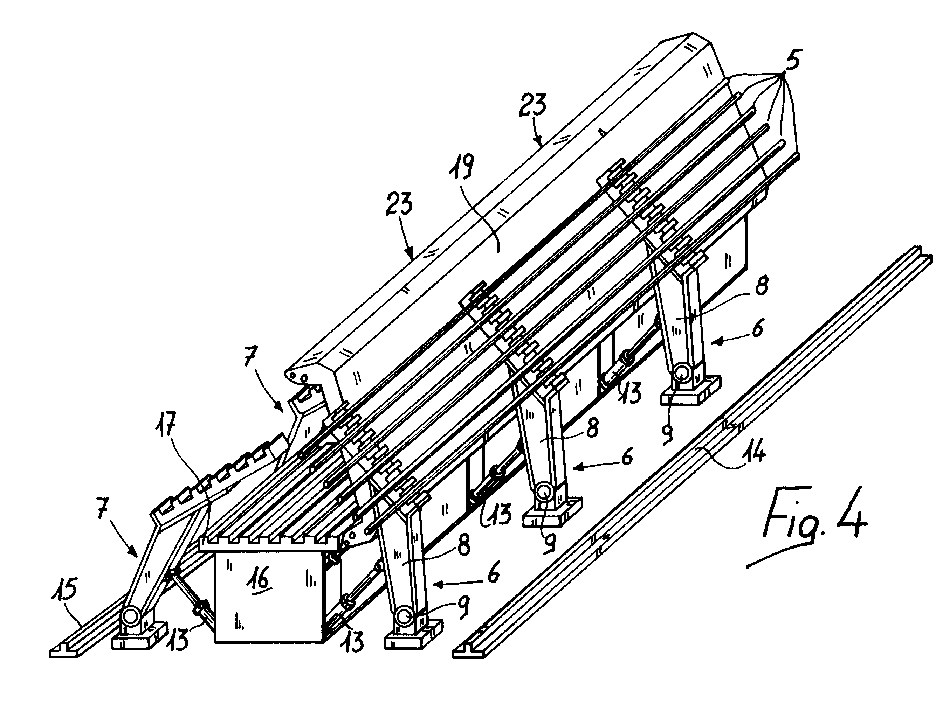

Between the two lines of racks 6 and 7 a table 16 is arranged, composed of a plurality of modules having a length equal to the free interspace between two consecutive racks and having a separation interval substantially equal to the transverse dimensions of a rack 6 or 7 so that the rack, by actuation of its own positioning piston 13, can be lowered to assume the position indicated at 7a in figure 3.

Upwardly, the table 16 has a thermally insulated support body 17 provided with a plurality of spaced parallel seats 18 with dimensions equivalent to the grooves 11 of the racks.

Upwardly, said table is closed by a cover 19 which has a double hinge (20,21) on both sides, that is to say along the sides parallel and adjacent to the two rack lines 6 and 7.

Each of the hinges 20 and 21 can be locked or released depending on whether the cover 19 is opened on one side or on the other to serve one of the two rack lines 6 and 7.

The opening on one side or the other occurs by means of the actuation of pistons 22 each provided with a stem head disengageable from a convenient fixing point on the cover 19.

The cover 19 is also thermally insulated so that when the cores 5 are inserted in the grooves 18 they are in a small size, fully thermally insulated environment.

The insertion occurs by lowering one of the two racks 6 and 7 together with the head with the chucks after having conveniently opened the cover 19 on the respective side and then depositing the cores 5, on which the tubes have already been packaged with raw rubber, within the seats 18.

The racks, such as the one indicated at 7a in figure 3, are further lowered so as to allow the completion of the insulation by inserting insulating sectors (not illustrated) in the interspace between one module and the other of the table 16.

In this manner the tubes packaged on the metallic cores 5 are completely contained within a considerable thermally insulating mass.

During the same operation of lowering one of the two racks 6 or 7 to move cores and tubes into the table 19, the ends of the metallic cores 5 are positioned within two terminal strips (not illustrated) located at the chucks 3 and 4 which will allow the passage of electric current in said cores 5.

The passage of the current causes, by Joule effect, the heating of said cores to a preset temperature which determines the vulcanization of the raw rubber which has been used to package the tube on said cores 5.

After a convenient heating and subsequent vulcanization time, the cover 19 is again opened and the racks which were in lowered position are raised after opening the terminal strip of electric contacts, achieving the extraction from the table of the set of metallic cores with now vulcanized and finished tubes.

After this operation, a simple operation of extraction of the core is executed by blowing air in with the same method currently already in use.

The operation and the use of the machine are apparent from what has been described and illustrated.

In practice the machine allows a single operator to perform one or more passes with a rail-mounted carriage arranged to the side of the first rack so as to provide the packaging of a plurality of tubes, individually or simultaneously winding on one or more cores rubber, fabrics or even metallic spirals.

When an entire rack has been completed, the cover of the table is opened at the side which allows the insertion of this first plurality of packaged tubes.

Once the tubes are accommodated within the table and the cores are fed electric current, the operator works on the second rack preparing and packaging a second plurality of tubes.

When his work is complete and the vulcanization of the tubes contained in the thermally insulated table is complete, the opening of the cover of said table, the extraction of the vulcanized and finished tubes, the closure and reopening on the other side of the cover of the table, for the introduction of the packaged and ready but still raw tubes carried by the second rack, are performed.

It can thus be seen that a single operator can control and perform all the operations ranging from packaging to vulcanization and extraction of the finished product without the same being moved or transferred to other types of machines or equipment.

A first advantage which is apparent in a machine provided according to the invention is the reduced dimensions thereof with respect to the room currently required to execute a similar sequence of operations.

Multiple chucks and on-site vulcanization considerably reduce the dimensions and allow to use the available room more rationally.

The elimination of the need for movements of the product from one machine to another, besides allowing the elimination of bulky and expensive conveyors such as bridge cranes or elevators of a different type, has also allowed to considerably reduce the specialized personnel, greatly increasing productivity and per capita yield.

From what has been described and illustrated it can thus be seen that the proposed aim and objects have all been achieved and in particular that an extremely functional machine has been provided with which high yields can be obtained at low costs.

Naturally, starting from the same inventive concept the embodiments may be other and different ones, and similarly the componentry can be chosen in any manner according to convenience.

Materials and dimensions may be chosen in any manner according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Multiple-chuck machine for making tubes, by helically winding raw material on cores characterized in that it comprises at least one head (1,2) with multiple chucks (3,4) which motorizes a plurality of cores (5) arranged side by side and supported by a plurality of resting racks (6,7) articulated by means of hinges (9) on a basement and positionable in a synchronous manner by means of actuators (13), said racks (6,7) being flanked by a thermally insulated openable table (16) adapted to contain said cores (5) the heads of said table having each a multiple electric terminal strip for supplying power to said cores (5) so as to determine a rise in their temperature, by Joule effect, for the vulcanisation of the raw tubes.

2. Multiple-chuck machine according to claim 1, characterized in that said racks (6,7) comprise an arm (8) having a lower end articulated by means of said hinge (9) to the basement of the machine, said arm (8) being upwardly associated with a box-like element (10) provided with a plurality of grooves (11) each adapted to accommodate one of said metallic cores (5), allowing a free rotation thereof.

3. Multiple-chuck machine according to claims 1 and 2, characterized in that within said grooves (11) at least two free support rollers (12) for said core (5) are provided.

4. Multiple-chuck machine according to one or more of the preceding claims, characterized in that each of said racks (6,7) is provided with an oleodynamic piston (13), said pistons (13) allowing the synchronous movement of all said racks (6,7) from a substantially verticaly working position to a second position lowered below the plane of said table (16) simultaneously with an equal movement of said heads (1,2).

5. Multiple-chuck machine according to one or more of the preceding claims, characterized in that said movement of said racks (6,7) occurs without disengaging said heads (1,2) of said cores (5) from said chucks (3,4) of said heads (1,2).

6. Multiple-chuck machine according to one or more of the preceding claims,characterized in that said table (16) is constituted by modular elements arranged parallel to the row of said racks (6,7), said modular elements being interrupted at the racks (6,7) for a length equal to the dimensions of said rack (6,7).

7. Multiple-chuck machine according to one or more of the preceding claims, characterized in that said table (16) has longitudinal seats (18) adapted to accommodate said cores (5) on which the raw tube has been packaged, said seats (18) being provided in a thermally insulated body (17).

8. Multiple-chuck machine according to one or more of the preceding claims, characterized in that in the lowering motion of one row of racks (6,7), said racks (6,7) deposit said cores (5) with the packaged and raw tube within said seats (18) of said table (16).

9. Multiple-chuck machine according to one or more of the preceding claims, characterized in that said table (16) is provided with a thermally insulated cover (19) articulated with disengageable hinges (20,21) on both sides parallel to said racks (6,7), the opening thus being possible alternately towards one or the other row of said racks (6,7).

10. Multiple-chuck machine according to one or more of the preceding claims, characterized in that the ends of said cores (5) with the raw tube wound on, in position of containment within the seats (18) of said table (16), are inserted in electric terminal strips which allow their supply with electric current to determine their heating by Joule effect.

11. Multiple-chuck machine according to one or more of the preceding claims, characterized in that after the lowering of a row of racks (6,7) below the plane of said table (16), complementary thermally insulating elements are provided, adapted to close the interspace between table modules.

12. Multiple-chuck machine according to one or more of the preceding claims, characterized in that parallel to each row of racks (6,7) a guiding rail (14, 15) is provided for a moving carriage on which an operator performs the winding of strips of fabric, rubber and stiffening spirals where required, on one or more of said cores (5).

**Patentansprüche**

1. Maschine mit mehreren Spannfuttern zur Herstellung von Rohren durch wendelförmiges Aufwickeln von Rohmaterial auf Kerne, **dadurch gekennzeichnet,** daß sie wenigstens einen Kopf (1,2) mit mehreren Spannfuttern (3,4) aufweist, der eine Vielzahl von nebeneinander angeordneten und von einer Vielzahl von mittels Scharnieren (9) an einem Fundament angelenkten und auf synchrone Weise mittels Aktuatoren (13) positionierbaren Auflagegestellen (6,7) abgestützten Kernen (5) antreibt, wobei die besagten Auflagegestelle (6,7) von einem thermisch isolierten, zu öffnenden Tisch (16) flankiert sind, der angepaßt ist, um die besagten Kerne (5) aufzunehmen, und wobei die Köpfe des besagten Tisches jeweils eine elektrische Mehrfachanschlußleiste zur Zuführung von Strom an die besagten Kerne (5) aufweisen, um durch den Joule-Effekt ihren Temperaturanstieg für die Vulkanisierung der Rohmaterialrohre zu bestimmen.

2. Maschine mit mehreren Spannfuttern nach Anspruch 1, **dadurch gekennzeichnet,** daß die besagten Auflagegestelle (6,7) einen Arm (8) mit einem mittels des besagten Scharniers (9) am Fundament der Maschine angelenkten unteren Ende aufweisen, wobei dem besagten Arm (8) nach oben ein kastenförmiges Element (10) mit einer Vielzahl von Nuten (11) zugeordnet ist, die jeweils einen der besagten Metallkerne (5) aufnehmen können, wobei diese frei rotieren können.

3. Maschine mit mehreren Spannfuttern nach den Ansprüchen 1 und 2, **dadurch gekennzeichnet,** daß innerhalb der besagten Nuten (11) wenigstens zwei freie Abstützrollen (12) für den besagten Kern (5) vorgesehen sind.

4. Maschine mit mehreren Spannfuttern nach einem oder mehreren der vorhergehenden Ansprüche, **dadurch gekennzeichnet,** daß jedes der besagten Auflagegestelle (6,7) mit einem öldynamischen Kolben (13) versehen ist, wobei die besagten Kolben (13) die synchrone Bewegung aller besagten Auflagegestelle (6,7) aus einer im wesentlichen vertikalen Arbeitsstellung in eine zweite unter die Ebene des besagten Tisches (16) abgesenkte Stellung gleichzeitig mit einer gleichen Bewegung der besagten Köpfe (1,2) erlauben.

5. Maschine mit mehreren Spannfuttern nach einem oder mehreren der vorhergehenden Ansprüche, **dadurch gekennzeichnet,** daß die besagte Bewegung der besagten Auflagegestelle (6,7) stattfindet, ohne daß die besagten Köpfe (1,2) der besagten Kerne (5) außer Eingriff mit den besagten Spannfuttern (3,4) der besagten Köpfe (1,2) kommen.

6. Maschine mit mehreren Spannfuttern nach einem oder mehreren der vorhergehenden Ansprüche, **dadurch gekennzeichnet,** daß der besagte Tisch (16) aus parallel zu der Reihe der besagten Auflagegestelle (6, 7) angeordneten modularen Elementen besteht, die an den Auflagegestellen (6,7) über eine den Abmessungen der besagten Auflagegestelle (6,7) gleiche Länge unterbrochen sind.

7. Maschine mit mehreren Spannfuttern nach einem oder mehreren der vorhergehenden Ansprüche, **dadurch gekennzeichnet,** daß der besagte Tisch (16) Längssitze (18) aufweist, die die besagten Kerne (5), auf die das Rohmaterialrohr aufgebracht worden ist, aufnehmen können, wobei die besagten Sitze (18) in einem thermisch isolierten Körper (17) vorgesehen sind.

8. Maschine mit mehreren Spannfuttern nach einem oder mehreren der vorhergehenden Ansprüche, **dadurch gezeichnet,** daß bei der Absenkbewegung einer Reihe von Auflagegestellen (6,7) diese die besagten Kerne (5) mit dem aufgebrachten Rohmaterialrohr innerhalb der besagten Sitze (18) des besagten Tisches (16) ablegen.

9. Maschine mit mehreren Spannfuttern nach einem oder mehreren der vorhergehenden Ansprüche, **dadurch gekennzeichnet,** daß der besagte Tisch (16) mit einer thermisch isolierten, mit abnehmbaren Scharnieren (20,21) auf beiden Seiten parallel zu den Auflagegestellen (6,7) angelenkten Abdeckung (19) versehen ist, wodurch die Öffnung somit abwechselnd zu der einen oder der anderen Reihe der besagten Auflagegestelle (6,7) möglich ist.

10. Maschine mit mehreren Spannfuttern nach einem oder mehreren der vorhergehenden Ansprüche, **dadurch gekennzeichnet,** daß die Enden der besagten Kerne (5) mit dem darauf-gewickelten Rohmaterialrohr in der Aufnahme-stellung innerhalb der Sitze (18) des besagten Tisches (16) in elektrische Anschlußleisten eingeführt sind, wodurch sie mit elektrischem Strom zur Bestimmung ihrer Erwärmung durch den Joule-Effekt versorgt werden können.

11. Maschine mit mehreren Spannfuttern nach einem oder mehreren der vorhergehenden Ansprüche, **dadurch gekennzeichnet,** daß nach dem Absenken einer Reihe von Auflagegestellen (6,7) unter die Ebene des besagten Ti-sches (16) komplementäre thermisch isolieren-de Elemente vorgesehen sind, die den Zwi-schenraum zwischen den Tischmodulen schlie-ßen.

12. Maschine mit mehreren Spannfuttern nach einem oder mehreren der vorhergehenden An-sprüche, **dadurch gekennzeichnet,** daß pa-rallel zu jeder Reihe von Auflagegestellen (6,7) eine Führungsschiene (14,15) für einen beweglichen Schlitten vorgesehen ist, auf dem eine Bedienungsperson das Aufwickeln von Stoffstreifen, Gummi und Versteifungsspiralen nach Bedarf auf einen oder mehreren der besagten Kerne (5) durchführt.

**Revendications**

1. Machine à mandrins de serrage multiples permettant de fabriquer des tube en enroulant une matière brute en hélice sur des noyaux, caractérisée en ce qu'elle comprend au moins une tête (1, 2) à mandrins de serrage multiples (3, 4) qui entraînent par moteur plusieurs noyaux (5) disposés côte à côte et portés par plusieurs râteliers de repos (6, 7) articulés au moyen d'articulations (9) sur un socle et agencés de façon à pouvoir être positionnés d'une manière synchrone au moyen d'actionneurs (13), ces râteliers (6, 7) étant adjacents à une table (16) à isolation thermique, agencée de façon à pouvoir être ouverte et adaptée de façon à contenir les noyaux (5), les extrémités de la table comportant chacune une bande formant bornes électriques multiples et servant à alimenter les noyaux (5) en courant de façon à provoquer une élévation de leur température par effet Joule, en vue de la vulcanisation des tubes en matière brute.

2. Machine à mandrins de serrage multiples suivant la revendication 1, caractérisée en ce que les râteliers (6, 7) comprennent un bras (8) dont une extrémité inférieure est articulée au moyen de l'articulation (9) sur le socle de la machine, ce bras (8) étant solidaire, vers le haut, d'un élément en forme de caisson (10) qui est pourvu de plusieurs gorges (11) agencées chacune de façon à recevoir l'un des noyaux métalliques (5) en permettant une rotation libre de celui-ci.

3. Machine à mandrins de serrage multiples suivant l'une des revendications 1 et 2, caractérisée en ce que, dans les gorges (11), il est prévu au moins deux galets (12) de support libre d'un noyau (5).

4. Machine à mandrins de serrage multiples suivant l'une des revendications précédentes, caractérisée en ce que chacun des râteliers (6, 7) est pourvu d'un piston oléodynamique (13), les pistons (13) permettant un mouvement synchrone de tous les râteliers (6, 7) d'une position de travail pratiquement vertical à une seconde position abaissée au-dessous du plan de la table (16), d'une manière simultanée à un déplacement identique des têtes (1, 2).

5. Machine à mandrins de serrage multiples suivant l'une des revendications précédentes, caractérisée en ce que le déplacement des râteliers (6, 7) s'effectue sans que les extrémités des noyaux (5) ne soient désengagées des mandrins (3, 4) des têtes (1, 2).

6. Machine à mandrins de serrage multiples suivant l'une des revendications précédentes, caractérisée en ce que la table (16) est constituée d'éléments modulaires disposés parallèlement à la rangée de râteliers (6, 7), ces éléments modulaires étant interrompus à l'endroit des râteliers (6, 7) sur une longueur égale à la dimension d'un tel ratelier (6, 7).

7.  Machine à mandrins de serrage multiples suivant l'une des revendications précédentes, caractérisée en ce que la table (16) comporte des logements longtudinaux (18) destinés à recevoir les noyaux (5) sur lesquels les tubes de matière brute ont été posés, les logements (18) étant pourvus d'un corps d'isolation thermique (17).

8.  Machine à mandrins de serrage multiples suivant l'une des revendications précédentes, caractérisée en ce que, pendant le mouvement d'abaissement de l'une des rangées de râteliers (6, 7), les râteliers (6, 7) déposent les noyaux (5), sur lesquels les tubes de matière brute ont été posés, à l'intérieur des logements (18) de la table (16).

9.  Machine à mandrins de serrage multiples suivant l'une des revendications précédentes, caractérisée en ce que la table (16) est pourvue d'un couvercle (19) à isolation thermique qui est articulé sur les deux côtés parallèles aux râteliers (6, 7) au moyen d'articulations (20, 21) agencées de façon à pouvoir être libérées, l'ouverture étant ainsi possible alternativement vers une rangée des râteliers (6, 7) ou vers l'autre.

10. Machine à mandrins de serrage multiples suivant l'une des revendications précédentes, caractérisée en ce que les extrémités des noyaux (5), sur lesquels les tubes de matière brute sont enroulés et qui sont en position de retenue à l'intérieur des logements (18) de la table (16), sont insérées dans des bandes formant bornes électriques qui permettent leur alimentation en courant électrique afin de provoquer leur chauffage pareffet Joule.

11. Machine à mandrins de serrage multiples suivant l'une des revendications précédentes, caractérisée en ce qu'après l'abaissement d'une rangée de râteliers (6, 7) au-dessous du plan de la table (16), il est prévu des éléments complémentaires d'isolation thermique agencés de façon à fermer les espaces intermédiaires situés entre les modules de la table.

12. Machine à mandrins de serrage multiples suivant l'une des revendications précédentes, caractérisée en ce que, parallèlement à chaque rangée de râteliers (6, 7), il est prévu un rail de guidage (14, 15) pour un chariot mobile sur lequel un opérateur exécute l'enroulement de bandes de tissu, de caoutchouc et d'éléments hélicoïdaux de renforcement lorsqu'ils sont nécessaires, sur un ou plusieurs des noyaux (5).

Fig. 1

Fig. 2

Fig. 3

Fig. 4

EP 0 281 016 B1